# EUROPEAN PATENT APPLICATION

(11) **EP 4 415 142 A1**
(43) Date of publication of application: **14.08.2024**
(21) Application number: 23155943.6
(22) Date of filing: 10.02.2023
(51) Int. Cl.: H01M 50/30, H01M 50/317, H01M 50/342, H01M 10/52, H01M 50/184, H01M 50/186, H01M 50/308

(54) **A BREATHER VENT**

(71) Applicant: Rimac Technology LLC, 10431 Sveta Nedelja (HR)
(72) Inventor: Skrtic, Ivan, 47262 Generalski Stol (HR)
(74) Representative: Tarabbia, Luigi

(57) **Abstract**

A breather vent comprises a peripheral frame and a breathing membrane contained within in the peripheral frame and adapted to withstand a given range of nominal pressure exerted on a surface of the breathing membrane; the breather vent further comprises an impermeable membrane contained within in the peripheral frame and configurable between a pre-testing condition, wherein it keeps a structural integrity under application of a pressure lesser than a predetermined threshold value, and a post-testing condition, wherein it defines at least a pressure discharge opening in occurrence of said threshold value of pressure exerted on said surface of the breathing membrane, the breathing membrane being adapted to keep a structural integrity over time both in occurrence of said pre-testing condition and of said post-testing condition of the impermeable membrane.

## Description

The present invention is related to a so-called "breather vent", that is a valve which can exemplificatively (yet not limited to) be mounted onto electric accumulators (or "batteries") in order to equalize pressures acting on both sides of the breather vent itself or in order to maintain a given range of "safe" gaseous pressure inside the battery or accumulator itself, or anyway which can be mounted onto/into battery systems, inverters, on-board chargers (OBC), electronic control units (ECU) (or, more in general in any enclosure that needs pneumatic pressure equalizing).

It is known in the art that electric accumulators may be affected by internal pressure gradients and/or variations over time, e.g. due to their inherent heating cycles or when they are subjected to changes in altitude: such variations can be quantitatively very relevant and the build-up time for such a pressure differential can be very narrow, thereby leading to severe problems of structural integrity and/or even explosions.

Furthermore, the current discharges which may be requested to an accumulator (e.g. when this accumulator is embedded in a high performance vehicle), and even rapid charging processes may influence the internal pressure of an accumulator, due to the intrinsic heat generation involved in such transient situations: more in general, the internal pressure of an accumulator is known to be variable both under the influence of environmental conditions (e.g. daytime or night time, season of the year, weather conditions and/or precipitations) and/or under the various usage conditions and inflows/outflows of electrical current.

In order to guarantee the structural integrity of the battery/accumulator casing (or more in general, of the accumulator considered as a whole), one or more breather vents are usually placed in suitable locations of the accumulator's outer structure: such breather vents essentially consist, in the known art, of a deformable and gas-permeable membrane which allows for a safe "transitional" increase or decrease of the internal accumulator pressure in its various working conditions.

These known devices, despite being largely spread in the technical sector of reference, has some non-negligible advantages, in particular in association with the execution of the so-called "end-of-line tightness testing" (EOL) procedures that every accumulator or battery (or battery pack) should undergo in order to ascertain, and maintain, its integrity throughout a cycle of internal pressure variations (and to ensure or verify the IP rating requirements).

Actually, the EOL testing procedure implies that a forced overpressure is applied to the accumulator, and the gas-permeable nature of the known-type breather vents implies that the test procedure may not be conducted properly (or it cannot ever be done, owing to the necessity of providing some confined testing volume which has to be "externally closed/isolated"): therefore, the testing results cannot be considered as "validating" the accumulator, which cannot be safely used or assembled into a complex object (e.g., an electrically-powered vehicle).

Otherwise stated, the breather vents known in the art are not compatible with a satisfactory and reliable conduction of the EOL testing procedures, resulting therefore in strong economic losses and a substantial rebate of the productivity ratio of the accumulators and of the complex systems - that is, exemplificatively speaking, electric-powered vehicles - which need such accumulators in order to be completely functional.

The just cited shortcomings may be dealt with, in the prior art, by setting up special test facilities and machinery, in which a confined "external testing volume" is defined (usually, by positioning special jigs to isolate the area/surface of the accumulator which must undergo through EOL testing), but these special testing features are cumbersome, costly and require a complex protocol to be implemented and actuated in order to have sufficiently relatable test results: once again, this kind of prior art leads to economic inconvenience and undesired stretching-out of the production and testing timely scale.

Having stated the prior art drawbacks, it's therefore an object of the present invention to provide a breather vent which, when properly installed and integrated into an accumulator or battery, is capable of maintaining its internal pressure within predetermined safety limits during normal usage of the accumulator/battery and which is also capable of enabling and withstanding an extensive "EOL" testing procedure without any compromission of the functionality of the accumulator/battery undergoing the testing procedure and without compromising the useability of the accumulator/battery after the testing procedure has been completed.

At the same time, the present invention aims to devise a breather vent which is very reliable and quick to design, assemble and produce, and which therefore allows for a simple and fast integration in an accumulator's outer structure.

These aims, along with other technical advantages, will be illustrated and achieved by a breather vent according to the present invention as described and claimed hereinafter, which is illustrated in the accompanying drawings which show a possible - yet not limited to - embodiment of the present invention itself and for which respectively:

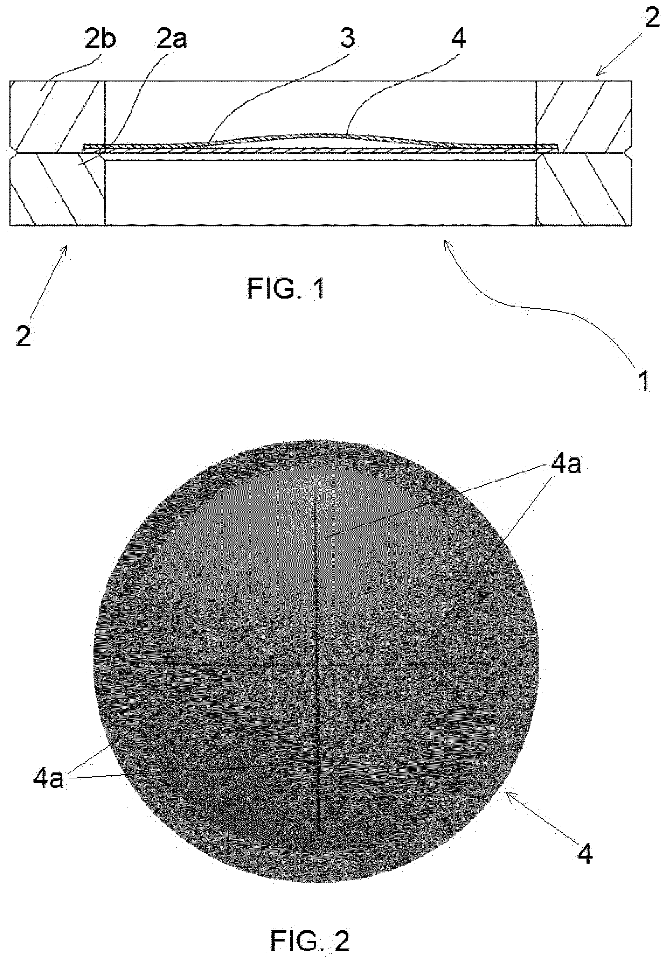

- Figure 1 shows a schematic section view of a breather vent according to the invention in association with an outer structure of an accumulator;
- Figure 2 shows a view from above of a component of the breather vent shown in figure 1;

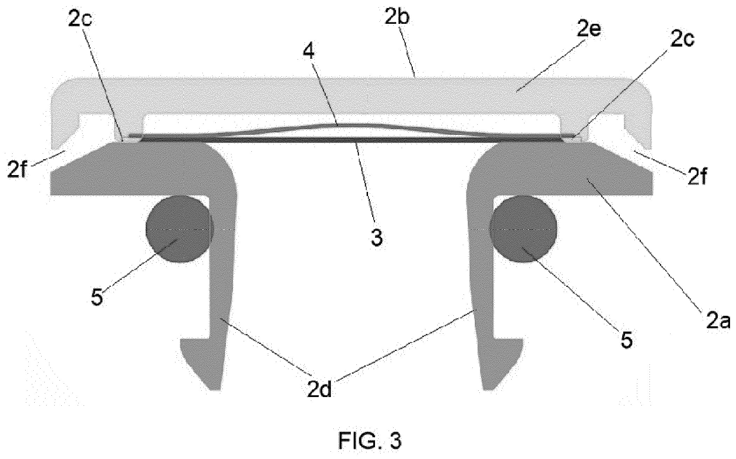

- Figure 3 shows a schematic section view of another possible embodiment of the breather vent according to the invention; and
- Figure 4 shows a graph over time of a forced overpressure applied on a breather vent according to the invention (and therefore, on an accumulator equipped with such breather vent) during an EOL testing procedure.

The breather vent according to the invention is structurally and functionally integrated in an "enclosure" (that is, for the sake of self- definition of the present invention's own dictionary, an object defining an internal volume wherein hydraulic and/or pneumatic pressure fluctuations may occur) which for example can be a battery or accumulator (or in a single "cell" or "module" of a battery pack, which in turn may have several single units which have respectively at least one of such breather vents).

Such a breather vent basically comprises a peripheral frame (2) and a breathing membrane (3) contained within the peripheral frame (2): the breathing membrane (3) is conveniently adapted to withstand a given range of nominal pressure exerted at least on a surface of the breathing membrane (3) (or, generally speaking, is adapted to withstand a given range of nominal pressure exerted from within the body on the entire breather vent (1) assembly).

Advantageously, the breather vent (1) according to the invention further comprises an impermeable membrane (4) inscribed in the peripheral frame (2): such an impermeable membrane (4) is configurable at least between a pre-testing condition, wherein it keeps a structural integrity under application of a pressure lesser than a predetermined threshold value, and a post-testing condition wherein it defines at least a pressure discharge opening in occurrence of the just cited threshold value of pressure exerted from within the body of the accumulator.

Otherwise stated, the impermeable membrane (4) essentially acts as a "rupture disc" which bursts out in correspondence of a given value of pressure: therefore, the functional juxtaposition of the breathing membrane (3) (which remains constantly in its integrity status due to the fact that overpressures are simply discharged through it thanks to its permeable nature) and of the impermeable membrane (4) (which in turn is disposable) allows for the safe EOL testing and for the subsequent implementation into "operative life" of the accumulator without eventually having to discard it at the end of the testing procedure itself.

Coming back to the structural details of the invention and looking at the annexed figures, it can be seen that the breathing membrane (3) is adapted to keep a structural integrity over time both in occurrence of said pre-testing condition and of said post-testing condition of the impermeable membrane (4), and geometrically speaking the peripheral frame (2) defines a breathing port having a polygonal or circular or elliptical boundary; conveniently, the breathing membrane (3) and the impermeable membrane (4) are peripherally connected to the just cited boundary. Looking at the annexed figures it also can be seen that the breathing membrane (3) and/or the impermeable membrane (4) are mutually stacked one onto another, the impermeable membrane (4) being typically positionable so as to face an "outer space" with respect to the accumulator's body while the breathing membrane (3) is positionable so as to face an "inner space" of the just cited internal volume defined by the accumulator's body (or, in other words consistent within the dictionary of the present invention, the internal volume defined by the containing structure which is essentially defined by the accumulator's outer shell). According to design requirements, the breathing membrane (3) can be made of a porous material (e.g. made in/by PTFE or more in general of a suitable material which has a sufficient degree of air permeability), and more in general it can be designed in order to have a permeability comprised between 130 cm3/(kPa · min) and 500 cm3/(kPa · min); nevertheless, by suitably choosing porous materials, the thickness of the breathing membrane (3) can be consequently determined as a function of the structural requirements and as a function of the material permeability, as well.

Referring now to the impermeable membrane (4), in various - and yet non limiting - examples/embodiments of the present invention it can be observed that it can be made of graphite (or more in general, any other material showing a "bursting behavior" at a given threshold pressure value).

Structurally speaking, and in order to give a very precise behavior in occurrence to a "rupture pressure" which is substantially corresponding to the post-testing condition of the impermeable membrane (4), the impermeable membrane (4) itself may conveniently comprise a predetermined number of weakening lines (4a): such weakening lines (4a) can be located and/or dimensioned so as to promote a rupture of the impermeable membrane in occurrence of said threshold pressure value (e.g., they can be located on a face of the impermeable membrane (4) which is exposed towards said outer space with respect to the body). Delving even deeper in the details of the invention, it can be seen that the peripheral frame (2) comprises an inner portion (2a) engageable to the accumulator's body and an outer portion (2b) connected, e.g. in a reversible fashion, with said inner portion (2b) through suitable connection means (2c) (which may be, for example, a threading engagement or whatever else kind of mechanical or chemical connection, according to various possible design and/or operative requirements).

Conveniently, the inner portion (2a) may further comprise a suitable number of protrusions (2d) adapted to engage with the accumulator's body (such protrusions may for example comprise snap-fitting elements and/or threaded elements and/or bayonet-coupling elements at least partially counter-shaped to a corresponding fitting seat in the body itself), while the outer portion (2b) may further comprise a protection cover (2e) and a predetermined number of discharging ports (2f) perimetrally located with respect to the protection cover (2e) itself.

In order to ensure a better coupling/assembly with respect to the accumulator's body, the breather vent as herein described and claimed may further comprise at least a perimetral sealing body (5) placeable between the body and the inner portion (2a) and/or the outer portion (2b); such a perimetral sealing body (5) may in turn comprise an o-ring developing along the aforecited boundary.

Within the scope of the present invention falls also a "body", such body being typically associated to a battery or to an accumulator or to a battery pack and advantageously comprising at least an inner element capable of storing electrical energy, an outer containing structure containing the inner element and electrical connection means connected to said inner element and passing through said containing structure: in order to gain the technical advantages of the invention, such a body also comprises at least a breather vent (1) according to anything hereabove illustrated and/or according what herein claimed.

Also, an object of the present invention is a method of testing an object which may be generally defined as an "enclosure" (that is, an object defining an internal volume undergoing to pneumatic/hydraulic pressure fluctuations such as, for example, a battery, an accumulator or a battery pack): such a method takes consistent advantage from the presence, in the body to be tested, from the presence of the breather vent according to what hereabove described and/or according to what subsequently claimed.

From a temporal succession of operations standpoint, such a method comprises the following steps:
- filling, over a filling time period (T1), a containing structure of an enclosure (or more in general, a "body" wherein a given pressure is expected to be residing or fluctuating, and more in particular arising) so as to determine a filling pressure (P1) greater than a nominal pressure (PC) (such nominal pressure may for example be a pressure existing within an accumulator in its "steady state" at a given environmental temperature, with full electric charge stored and with no current inputs or outputs ongoing);
- reaching, over a stabilization time (T2), a stabilization pressure (P2) within the containing structure (such a stabilization pressure (P2) may typically be equal to said filling pressure (P1), and more in general the entity of such pressure may be dictated by design restraints or operative requirements for the accumulator undergoing the testing procedure itself);
- obtaining and measuring a pneumatic and/or hydraulic tightness of the containing structure, over a testing time (T3) and at a testing pressure (P3) (e.g., the just cited testing pressure (P3) may be equal to the stabilization pressure (P2));
- increasing, over a bursting time period (T4), the pressure within the containing structure up to a safety pressure (P4) (which in turn may conveniently correspond to the "threshold pressure value" at which the impermeable membrane (4) undergoes to a rupture; and
- determining at least one equalization pressure path, over at least one equalization time period (T5), in which the pressure within the containment structure decreases from the safety pressure (P4) back again to the nominal pressure (PC).

According to an embodiment of the present invention, the enclosure to be tested may also comprise a safety rupture device which is conveniently different and structurally/functionally "separated" with respect to the breather vent (1) which is part of the entire system (e.g., a battery pack): such a safety rupture device - not illustrated in the annexed drawings - is generally used in emergency events for venting out gasses or unwanted substances which are undesirably formed within the enclosure.

The safety rupture device implementable in the present invention can conveniently be of any known type, e.g. it can be a burst disk which has the capability of being kept "open" or "closed" by appropriate intervention: such a burst disk can therefore be held in place (e.g. in its closed configuration) during the execution of the EOL testing procedure, so that its opening pressure can be kept inside its intrinsic design limits. Whenever such a safety rupture device is present in the enclosure, it has an "effective rupture pressure" (that is, a pressure in the occurrence of which the safety rupture device breaks itself open so as to allow discharge from the "inside" of the enclosure) generally named (P7): in order to gain the reliability information about the enclosure (or in order to objectively decide if the enclosure is to be permanently discarded or if it can be reworked/refurbished), such an effective rupture pressure (P7) may typically be estimated at least at (about) 150% of the safety pressure (P4), and the net proportion between the testing pressure (P3) may therefore be 1 to 3 (which, the other way round, implies that the safety pressure (P4) amounts to at least 50%, and typically to 66% of the effective rupture pressure (P7)).

In terms of relative proportions of the pressures to be checked during the method according to the invention, the safety pressure (P4) amounts to (about) at least 200% of the testing pressure (P3), while the effective rupture pressure (P7) amounts to (about) 300% of the testing pressure (P3).

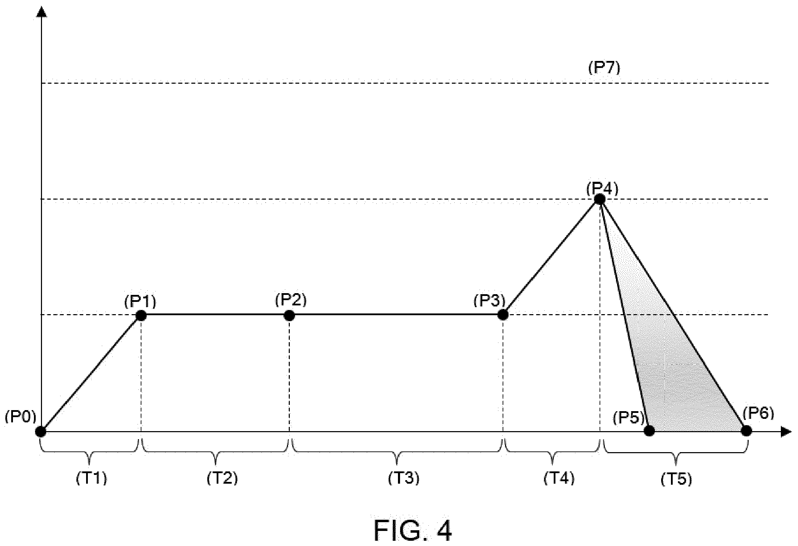

According to a further possible implementation of the invention, a further step of measuring a response pressure curve over time may be executed: such a response pressure curve over time may have a decreasing-overtime pattern from the safety pressure (P4) to a final setting pressure (P5) or (P6), and such final setting pressure (P5) or (P6) may typically be equal to (P0), as shown in figure 4.

The testing procedure according the invention may also conveniently comprise a step of discarding the enclosure, or a step of sending the enclosure to a reworking station: such steps are implementable, for example, if the just cited final setting pressure (P5) or (P6) is not matching a predetermined reference value o is not residing within a predetermined reference pressure range (which in turn can conveniently be comprised between (P5) and (P6)).

The described, illustrated and claimed invention achieves the aforecited technical aims and surpasses the shortcomings of the prior art hereabove mentioned, starting but not being limited to the advantage consisting in the full and 100% reliable execution of the EOL testing procedures without hampering od nullifying the basic functionality of the breather vent itself. Otherwise stated, the present invention implements a breather vent which can undergo the EOL testing procedure, and which retains its full performance capability after the EOL testing has been concluded. Besides, the overall structural architecture of the herein described and claimed breather vent allows for a very precise determination of the behaviour of the breather vent during the execution of EOL testing procedure, since the "disposable element" in the breather vent can be precisely designed to have a given response to the forced overpressures applied throughout the EOL procedure itself.

A further benefit deriving from the present invention relies in the fact that it allows a functional check of breather vent because of the required cycle on EOL testing, so that if an "enclosure" encompassing at least a breather vent is not passing such testing procedure, its non-replaceable parts are not damaged during the testing itself and so it can be sent-back to retrofitting or "re-working", without the need of irreversibly discard the enclosure itself (in particular, according to the invention if the enclosure is not passing the testing method but if the measured pressure is outside of the predetermined range between (P5) and (P6), the enclosure itself may be sent to a re-work and/or refurbishment as needed).

Of course, the breather vent according to the present invention can also be implemented in any other embodiment enclosed in its inventive concept as claimed, also by way of collateral modifications available to a skilled technician in the technical sector of pertinence of the invention itself, and thus maintaining the functional achievements of the invention along with practicality of production, usage, assembly and maintenance.

## Claims

1. a breather vent comprising:
- a peripheral frame (2); and
- a breathing membrane (3) contained within said peripheral frame (2), said breathing membrane (3) being adapted to withstand a given range of nominal pressure exerted at least on a surface of said breathing membrane (3);
**characterized in that** it further comprises an impermeable membrane (4) contained within said peripheral frame and configurable at least between a pre-testing condition wherein it keeps a structural integrity under application of a pressure lesser than a predetermined threshold value and a post-testing condition wherein said impermeable membrane (4) defines at least a pressure discharge opening in occurrence of said threshold value of pressure exerted on said surface of the breathing membrane (3), and wherein said breathing membrane (3) is adapted to keep a structural integrity over time both in occurrence of said pre-testing condition and of said post-testing condition of the impermeable membrane (4).

2. a breather vent as in claim 1, wherein said peripheral frame (2) defines a breathing port having a polygonal or circular or elliptical boundary, the breathing membrane (3) and the impermeable membrane (4) being peripherally connected to said boundary.

3. a breather vent as in claims 1 or 2, wherein the breathing membrane (3) and/or the impermeable membrane (4) are mutually stacked one onto another, the impermeable membrane (4) being preferably positionable so as to face an outer space with respect to the body and the breathing membrane (3) being more preferably positionable so as to face an inner space of said volume.

4. a breather vent as in any one of the preceding claims, wherein the breathing membrane (3) is made of a porous material, such porous material preferably comprising PTFE.

5. a breather vent as in any one of the preceding claims, wherein the breathing membrane (3) has a permeability comprised between 130 cm3/(kPa · min) and 500 cm3/(kPa · min).

6. a breather vent as in any one of the preceding claims, wherein the impermeable membrane (4) is made of graphite.

7. a breather vent as in any one of the preceding claims, wherein the impermeable membrane (4) comprises a predetermined number of weakening lines (4a), said weakening lines (4a) being located and/or dimensioned so as to promote a rupture of the impermeable membrane in occurrence of said threshold pressure value and being preferably located on a face of the impermeable membrane (4) exposed towards said outer space with respect to the body.

8. a breather vent as in any one of the preceding claims, wherein the peripheral frame (2) comprises:
- an inner portion (2a) engageable to the body; and
- an outer portion (2b) connected, preferably in a reversible fashion, with said inner portion (2b) through connection means (2c).

9. a breather vent as in claim 8, wherein the inner portion (2a) further comprises protrusions (2d) adapted to engage with the body, said protrusions preferably comprising snap-fitting elements and/or threaded elements and/or bayonet-coupling elements at least partially counter-shaped to a corresponding fitting seat in the body itself.

10. a breather vent as in claims 8 or 9, wherein the outer portion (2b) further comprises a protection cover (2e) and a predetermined number of discharging ports (2f) perimetrally located with respect to said protection cover (2e).

11. a breather vent as in any one of the preceding claims, wherein it further comprises at least a perimetral sealing body (5) placeable between the body and the inner portion (2a) and/or the outer portion (2b), said perimetral sealing body (5) preferably comprising an o-ring developing along said boundary.

12. a body, said body preferably being a battery or an accumulator or a battery pack, comprising at least an inner element capable of storing electrical energy, an outer containing structure containing said inner element and electrical connection means connected to said inner element and passing through said containing structure, wherein it further comprises at least a breather vent (1) according to any one of the preceding claims and associated at least to said containing structure.

13. a method of testing an enclosure, said enclosure preferably comprising a battery, an accumulator or a battery pack preferably according to claim 14 and even more preferably comprising at least a breather vent (1) according to any one of the preceding claims from 1 to 13, said method comprising the following steps:
- filling, over a filling time period (T1), the containing structure so as to determine a filling pressure (P1) greater than a nominal pressure (P0);
- reaching, over a stabilization time (T2), a stabilization pressure (P2) within the containing structure, said stabilization pressure (P2) being preferably equal to said filling pressure (P1); and
- obtaining and measuring a pneumatic and/or hydraulic tightness of the containing structure, over a testing time (T3) and at a testing pressure (P3), said testing pressure (P3) being preferably equal to said stabilization pressure (P2),
**characterized in that** it further comprises the following steps:
- increasing, over a bursting time period (T4), the pressure within the containing structure up to a safety pressure (P4); and
- determining at least one equalization pressure path, over at least one equalization time period (T5), in which the pressure within the containment structure decreases from said safety pressure (P4) to said nominal pressure (PC).

14. a method as in claim 13, wherein said safety pressure (P4) corresponds to said threshold pressure value at which the impermeable membrane (4) undergoes to a rupture, said safety pressure (P4) preferably being at least 200% of said testing pressure (P3).

15. a method as in claims 13 or 14, wherein said safety pressure (P4) amounts to at least 50%, and preferably to at least 66% of an effective rupture pressure (P7) of a safety device associated to said enclosure, said effective rupture pressure (P7) being more preferably at least 300% of said testing pressure (P3).

16. a method as in any one of the preceding claims further comprising a step of measuring a response pressure curve over time, said response pressure curve over time preferably being decreasing from the safety pressure (P4) to a final pressure ranging between (P5) or (P6).

17. a method as in claim 16, further comprising a step of discarding the enclosure, or a step of sending the enclosure to a reworking station, if said final setting pressure (P5) or (P6) is not matching a predetermined reference value or is not residing within a predetermined reference pressure range, said predetermined pressure range being preferably comprised between (P5) and (P6).

18. a method as in claims 16 or 17, wherein said final setting pressure (P5) or (P6) is equal to (P0).

## Amended claims

### Amended claims in accordance with Rule 137(2) EPC.

1. a breather vent comprising:
- a peripheral frame (2); and
- a breathing membrane (3) contained within said peripheral frame (2), wherein the breathing membrane (3) is made of a porous material, said breathing membrane (3) being adapted to withstand a given range of nominal pressure exerted at least on a surface of said breathing membrane (3);
- an impermeable membrane (4) contained within said peripheral frame and configurable at least between a pre-testing condition wherein it keeps a structural integrity under application of a pressure lesser than a predetermined threshold value and a post-testing condition, wherein said impermeable membrane (4) defines at least a pressure discharge opening in occurrence of said threshold value of pressure exerted on said surface of the breathing membrane (3),
**characterized in that**
said peripheral frame (2) defines a breathing port having a polygonal or circular or elliptical boundary, the breathing membrane (3) and the impermeable membrane (4) being peripherally connected to said boundary;
said breathing membrane (3) and said impermeable membrane (4) are mutually stacked one onto another and said breathing membrane (3) is adapted to keep a structural integrity over time both in occurrence of said pre-testing condition and of said post-testing condition of the impermeable membrane (4).

2. a breather vent as in claim 1, wherein the porous material comprises PTFE.

3. a breather vent as in any one of the preceding claims, wherein the breathing membrane (3) has a permeability comprised between 130 cm3/(kPa · min) and 500 cm3/(kPa · min).

4. a breather vent as in any one of the preceding claims, wherein the impermeable membrane (4) is made of graphite.

5. a body, said body being a battery or an accumulator or a battery pack, comprising at least an inner element capable of storing electrical energy, an outer containing structure containing said inner element and electrical connection means connected to said inner element and passing through said containing structure, wherein it further comprises at least a breather vent (1) according to any one of the preceding claims and associated at least to said containing structure.

6. a body as in claim 5, wherein the impermeable membrane (4) is positionable so as to face an outer space with respect to said body and the breathing membrane (3) is positionable so as to face an inner space of said volume.

7. a body as in claim 6, wherein the impermeable membrane (4) comprises a predetermined number of weakening lines (4a), said weakening lines (4a) being located and/or dimensioned so as to promote a rupture of the impermeable membrane in occurrence of said threshold pressure value and being located on a face of the impermeable membrane (4) exposed towards said outer space with respect to the body.

8. a body as in claims 6 or 7, wherein the peripheral frame (2) comprises:
- an inner portion (2a) engageable to the body; and
- an outer portion (2b) connected, preferably in a reversible fashion, with said inner portion (2b) through connection means (2c).

9. a body as in claim 8, wherein the inner portion (2a) further comprises protrusions (2d) adapted to engage with the body, said protrusions comprising snap-fitting elements and/or threaded elements and/or bayonet-coupling elements at least partially counter-shaped to a corresponding fitting seat in the body itself.

10. a body as in claims 8 or 9, wherein the outer portion (2b) further comprises a protection cover (2e) and a predetermined number of discharging ports (2f) perimetrally located with respect to said protection cover (2e).

11. a body as in claims from 8 to 10, wherein it further comprises at least a perimetral sealing body (5) placeable between the body and the inner portion (2a) and/or the outer portion (2b), said perimetral sealing body (5) comprising an o-ring developing along said boundary.

12. a method of testing an enclosure, said enclosure comprising a battery, an accumulator or a battery pack according to one of the preceding claims from 5 to 11 and comprising at least a breather vent (1) according to any one of the preceding claims from 1 to 11, said method comprising the following steps:
- filling, over a filling time period (T1), the containing structure so as to determine a filling pressure (P1) greater than a nominal pressure (P0);
- reaching, over a stabilization time (T2), a stabilization pressure (P2) within the containing structure, said stabilization pressure (P2) being preferably equal to said filling pressure (P1); and
- obtaining and measuring a pneumatic and/or hydraulic tightness of the containing structure, over a testing time (T3) and at a testing pressure (P3), said testing pressure (P3) being preferably equal to said stabilization pressure (P2),
**characterized in that** it further comprises the following steps:
- increasing, over a bursting time period (T4), the pressure within the containing structure up to a safety pressure (P4); and
- determining at least one equalization pressure path, over at least one equalization time period (T5), in which the pressure within the containment structure decreases from said safety pressure (P4) to said nominal pressure (PC).

13. a method as in claim 12, wherein said safety pressure (P4) corresponds to said threshold pressure value at which the impermeable membrane (4) undergoes to a rupture, said safety pressure (P4) preferably being at least 200% of said testing pressure (P3).

14. a method as in claims 12 or 13, wherein said safety pressure (P4) amounts to at least 50%, and preferably to at least 66% of an effective rupture pressure (P7) of a safety device associated to said enclosure, said effective rupture pressure (P7) being more preferably at least 300% of said testing pressure (P3).

15. a method as in any one of the preceding claims from 12 to 14 further comprising a step of measuring a response pressure curve over time, said response pressure curve over time preferably being decreasing from the safety pressure (P4) to a final pressure ranging between (P5) or (P6).

16. a method as in claim 15, further comprising a step of discarding the enclosure, or a step of sending the enclosure to a reworking station, if said final setting pressure (P5) or (P6) is not matching a predetermined reference value or is not residing within a predetermined reference pressure range, said predetermined pressure range being preferably comprised between (P5) and (P6).

17. a method as in claims 15 or 16, wherein said final setting pressure (P5) or (P6) is equal to (P0).
